# EUROPEAN PATENT APPLICATION

(11) **EP 2 636 551 A2**
(43) Date of publication of application: **11.09.2013**
(21) Application number: 13157598.7
(22) Date of filing: 04.03.2013
(51) Int. Cl.: B60J 5/06, B60J 5/04

(54) **Vehicle door structure**

(30) Priority: 05.03.2012 JP 2012048368
(71) Applicant: Kabushiki Kaisha Toyota Jidoshokki, Kariya-shi, Aichi 448-8671 (JP)
(72) Inventor: Ojima, Yoshio, Kariya-shi, Aichi 448-8671 (JP); Fukuhara, Taketo, Kariya-shi, Aichi 448-8671 (JP); Maruyama, Katsuya, Kariya-shi, Aichi 448-8671 (JP)
(74) Representative: TBK

(57) **Abstract**

A vehicle door structure 10 includes an idling mechanism 23 which invalidates an operation of a handle 15 controlling a locking mechanism 22 in a slide door panel 14 when a swing door panel 16 is opened, the idling mechanism 23 includes an abutting portion 50 which abuts against the vehicle body 5 at a closed position of a swing door panel and a linkage controlling portion 52 which controls a linkage between the handle 15 and the locking mechanism 22, and the linkage controlling portion 52 maintains the linkage between the handle 15 and the locking mechanism 22 when the abutting portion 50 abuts against the vehicle body 5 and breaks the linkage between the handle 15 and the locking mechanism 22 when the abutting portion 50 separates from the vehicle body 5.

## Description

### BACKGROUND OF THE INVENTION

### Field of the Invention

The present invention relates to a vehicle door structure, and, in particular, to a vehicle door structure having a composite door panel in which a slide opening and closing door panel and a swing opening and closing door panel are combined.

### +Related Background Art

As a vehicle door structure, for example, the invention disclosed in Japanese Patent Application Laid-Open No. 2006-240611 has been known. The vehicle door structure disclosed in Japanese Patent Application Laid-Open No. 2006-240611 has a first door panel and a second door panel, and the first door panel is configured to be slidable with respect to the second door panel, and the second door panel is configured to be swingable with respect to the vehicle body. Further, in the above-described vehicle door structure as the conventional technology, for the reason of improving the stability of the slide opening and closing door panel at the time of slide opening and closing, it is considered that the slide opening and closing door panel is supported by the vehicle at the time of slide opening and closing the slide opening and closing door panel, and the support of the slide opening and closing door panel by the vehicle is released when the slide opening and closing door panel is brought into a fully open condition.

As described above, in such a vehicle door structure in which a slide opening and closing door panel is supported by a vehicle at the time of opening and closing the slide opening and closing door panel, in consideration of the safety at the time of opening and closing the swing opening and closing door panel, and further, in order to reduce the load on a swinging member for swinging the swing opening and closing door panel, a state in which the slide opening and closing door panel overlaps the swing opening and closing door panel is preferably maintained at the time of opening and closing the swing opening and closing door panel. However, because a handle of the slide opening and closing door panel is made operable, when the handle of the slide opening and closing door panel is accidentally operated in a state in which the swing opening and closing door panel is open, the fixation of the slide opening and closing door panel and the swing opening and closing door panel is released. Thus, there is a risk that the slide opening and closing door panel is not supported by the vehicle, and the slide opening and closing door panel may be uncoupled from the swing opening and closing door panel.

An object of the invention is to provide a vehicle door structure in which it is possible to prevent the slide opening and closing door panel from being uncoupled from the swing opening and closing door panel when the swing opening and closing door panel is opened.

### SUMMARY OF THE INVENTION

According to an aspect of the invention, there is provided a vehicle door structure including: a first door panel which is installed at a first opening section provided in a vehicle body, the first door panel opens and closes the first opening section; a second door panel which is installed at a second opening section continuously provided adjacent to the first opening section, the second door panel opens and closes the second opening section; a sliding mechanism with which the first door panel is slidably mounted with respect to the vehicle body and the second door panel, and the first door panel is moved between a closed position at which the first opening section is closed and an open position at which the first door panel overlaps the second door panel at the same time as the first opening section is fully opened; a swinging mechanism with which the second door panel is swingably supported with respect to the vehicle body, and the second door panel is made swingable when the first door panel is at the open position,; and a locking mechanism which locks the first door panel to the second door panel at the open position of the first door panel, wherein the vehicle door structure further includes a controlling mechanism which invalidates an operation of a handle controlling the locking mechanism in the first door panel when the second door panel is opened.

The vehicle door structure is provided with a controlling mechanism which invalidates an operation of a handle controlling the locking mechanism in the first door panel when the second door panel is opened. Accordingly, since the operation of the handle is invalidated by the controlling mechanism even when the handle of the first door panel is operated when the second door panel is opened, the locking mechanism is not released. Thus, the fixation of the first door panel and the second door panel by the locking mechanism is maintained. As a result, it is possible to prevent the first slide opening and closing door panel from coming away from the second swing opening and closing door panel.

In an embodiment, the control mechanism includes an abutting portion which is provided in the first door panel or the second door panel and abuts against the vehicle body at the closed position of the second door panel where the second opening section is closed by the second door panel, and a linkage controlling portion which controls a linkage between the handle and the locking mechanism, and wherein the linkage controlling portion maintains the linkage between the handle and the locking mechanism when the abutting portion abuts against the vehicle body and breaks the linkage between the handle and the locking mechanism when the abutting portion separates from the vehicle body. With such a configuration, in the vehicle door structure, when the abutting portion separates from the vehicle body, that is, the second door panel is opened, the linkage between the handle and the locking mechanism is automatically broken. Thus, in the vehicle door structure, it is possible to reliably invalidate the operation of the handle of the first door panel when the second door panel is opened.

In accordance with the present invention, when the swing opening and closing door is opened, it is possible to prevent the slide opening and closing door from being uncoupled from the swing opening and closing door.

### BRIEF DESCRIPTION OF THE DRAWINGS

Fig. 1 is a side view showing a vehicle body to which a vehicle door structure according to an embodiment is applied.

Fig. 2A is a perspective view showing a state in which a slide door panel is in the process of being opened, and Fig. 2B is a perspective view showing a state in which the slide door panel is at an open position.

Fig. 3 is a perspective view showing a state in which a swing door panel is open in the vehicle door structure.

Fig. 4 is an overhead view of a state in which the slide door panel and the swing door panel are fixed.

FIG. 5 is a diagram visibly showing the slide door panel and the swing door panel from the outside of the vehicle.

FIGS. 6A and 6B are diagrams showing an idling mechanism.

FIGS. 7A and 7B are diagrams showing an operation of the idling mechanism.

FIGS. 8A and 8B are diagrams showing an operation of the idling mechanism.

### DESCRIPTION OF THE PREFERRED EMBODIMENTS

Hereinafter, preferred embodiments of the present invention will be described in detail with reference to the accompanying drawings. In addition, the same or corresponding components are denoted by the same reference numerals in the description of the drawings, and overlapping descriptions will be omitted.

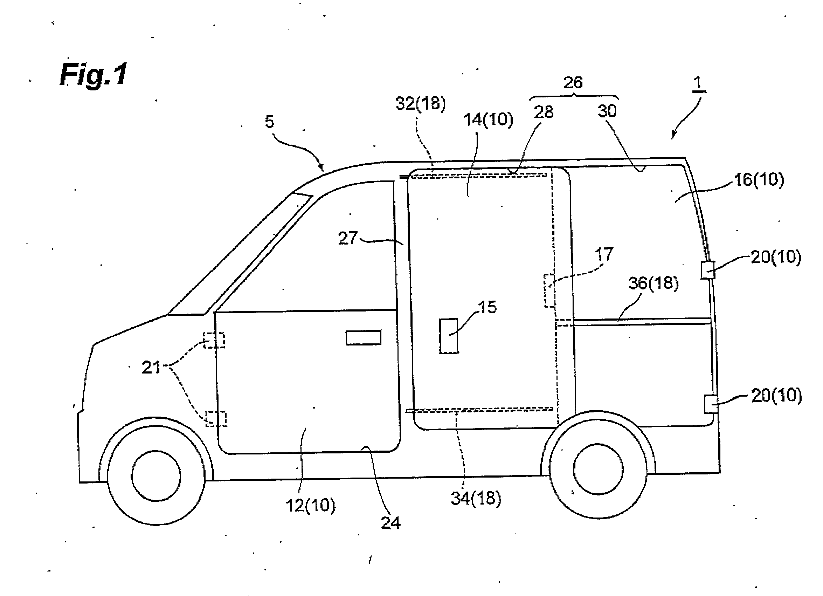

Fig. 1 is a side view showing a vehicle body to which a vehicular door panel according to an embodiment is applied. In addition, in the following descriptions, the words "front," "rear," "upper," "lower," and the like may be used in some case. These words correspond to the front and rear/upper and lower portions of a vehicle (automobile).

A vehicle 1 shown in Fig. 1 is, for example, a minivan to which a vehicle door structure 10 according to the embodiment is applied. In the following description, an example in which the vehicle door structure 10 is applied to one side surface (left side surface) of the vehicle 1 shown in Fig. 1 will be described. A similar configuration may be provided on the other side surface.

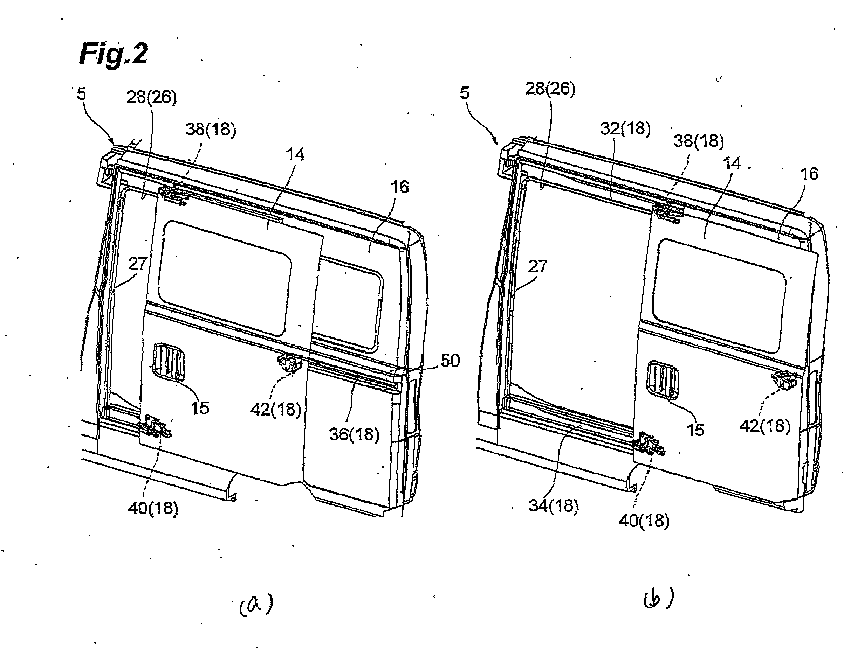

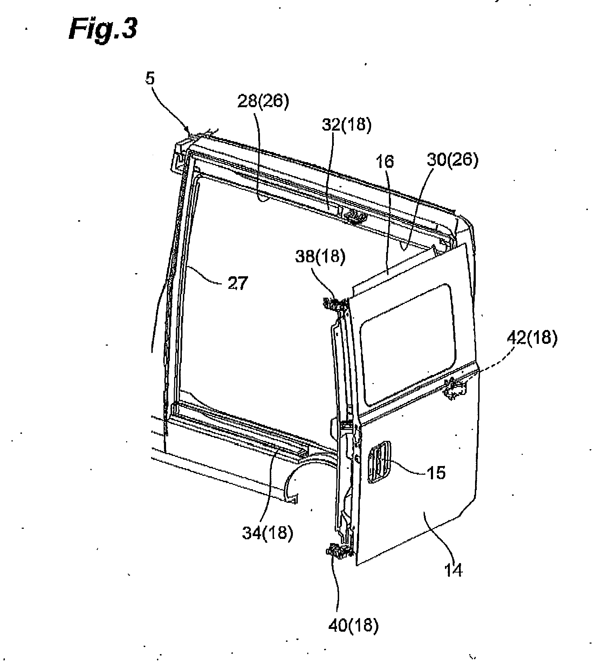

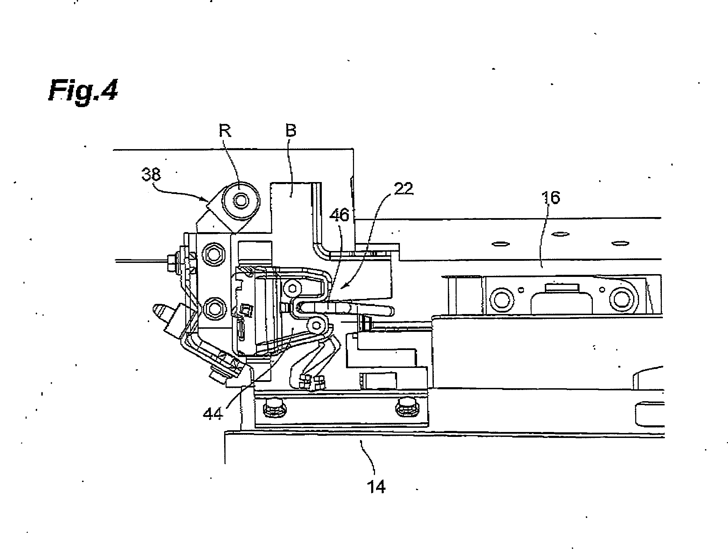

Fig. 2A is a perspective view showing a state in which a slide door panel is in the process of being opened, and Fig. 2B is a perspective view showing a state in which the slide door panel is at an open position. Fig. 3 is a perspective view showing a state in which a swing door panel is open in the vehicle door structure. Fig. 4 is an overhead view of a state in which the slide door panel and the swing door panel are fixed.

As shown in the respective diagrams, the vehicle door structure 10 includes a front door panel 12, a slide door panel (first door panel) 14, a swing door panel (second door panel) 16, a slide mechanism (sliding mechanism) 18, hinge mechanisms (swinging mechanism) 20, a locking mechanism 22 and a idling mechanism 23 (controlling mechanism).

First, a front opening section 24 to which the front door panel 12 is installed and a rear opening section 26 to which the slide door panel 14 and the swing door panel 16 are installed will be described.

The front opening section 24 and the rear opening section 26 are provided in one side surface of a vehicle body 5. The front opening section 24 is provided in the front of the vehicle body 5, and is a portion through which someone gets in or gets out of a driver seat or a passenger seat. The front door panel 12 is a door panel for opening and closing the front opening section 24, and is provided so as to be swingable with respect to the vehicle body 5 by the hinge mechanisms 20.

The rear opening section 26 is provided in the rear of the vehicle body 5, and is a portion through which someone gets in and/or gets out of the rear seats, or puts in and/or takes out baggage. The rear opening section 26 is partitioned from the front opening section 24 with a pillar 27. The rear opening section 26 is composed of a first opening section 28 and a second opening section 30. The first opening section 28 and the second opening section 30 are continuously provided adjacent to each other in the front-back direction. The first opening section 28 is provided on the front side of the vehicle body 5 in the rear opening section 26, and the second opening section 30 is provided on the rear side of the vehicle body 5 in the rear opening section 26.

The slide door panel 14 is installed at the first opening section 28. The slide door panel 14 is a door panel for opening and closing the first opening section 28. The slide door panel 14 is provided so as to be slidable in the front-back direction with respect to the vehicle body 5 and the swing door panel 16 by the slide mechanism 18. A handle 15 is provided on the slide door panel 14, and the slide door panel 14 is opened and closed by operating the handle 15.

The swing door panel 16 is installed at the second opening section 30. The swing door panel 16 is a door panel for opening and closing the second opening section 30. The swing door panel 16 is provided so as to be swingable with respect to the vehicle body 5 by the hinge mechanisms 20. A handle 17 is provided on the swing door panel 16, and the swing door panel 16 is opened and closed by operating the handle 17. The entire rear opening section 26 is opened and closed with the slide door panel 14 and the swing door panel 16.

The slide mechanism 18 is mounted to make the slide door panel 14 slidable with respect to the vehicle body 5. The slide mechanism 18 is a mechanism which moves the slide door panel 14 between a closed position at which the slide door panel 14 closes the first opening section 28 and an open position at which the slide door panel 14 overlaps the swing door panel 16 at the same time as the first opening section 28 is fully opened. The slide mechanism 18 includes an upper slide rail 32, a lower slide rail 34, an intermediate slide rail 36, an upper slide part 38, a lower slide part 40 and an intermediate slide part 42.

The upper slide rail 32 is disposed at the upper portion (a roof side rail) of the vehicle body 5 in the first opening section 28. The upper slide rail 32 is extended along the front-back direction of the vehicle body 5. The lower slide rail 34 is disposed at the lower portion (on the floor side) of the vehicle body 5 in the first opening section 28. The lower slide rail 34 is extended along the front-back direction of the vehicle body 5.

The intermediate slide rail 36 is disposed on the exterior surface side in the swing door panel 16. The intermediate slide rail 36 is disposed substantially at the central portion in the height direction of the vehicle body 5 in the swing door panel 16. The intermediate slide rail 36 is extended along the front-back direction of the vehicle body 5.

The upper slide part 38, the lower slide part 40 and the intermediate slide part 42 are provided on the slide door panel 14. As shown in Fig. 2, the upper slide part 38 is disposed at the upper portion on the front end side of the slide door panel 14. The lower slide part 40 is disposed at the lower portion on the front end side of the slide door panel 14. The intermediate slide part 42 is disposed on the rear end side and substantially at the central portion in the height direction of the slide door panel 14.

The upper slide part 38 includes a roller R. The lower slide part 40 and the intermediate slide part 42 include unillustrated rollers. The rollers are guided by the upper slide rail 32, the lower slide rail 34 and the intermediate slide rail 36 to slide, thereby making the slide door panel 14 slidable with respect to the vehicle body 5 and the swing door panel 16.

The slide door panel 14 is made freely movable in the front-back direction of the vehicle body 5 between the closed position at which the first opening section 28 is closed and the open position (Fig. 2B) at which the slide door panel 14 is located lateral to the swing door panel 16 to overlap the swing door panel 16 at the same time as the first opening section 28 is fully opened.

Specifically, when the slide door panel 14 is at the closed position, the upper, lower and intermediate slide parts 38, 40 and 42 are guided by the upper, lower and intermediate slide rails 32, 34 and 36. Further, when the slide door panel 14 is at the open position, the upper and lower slide parts 38 and 40 are detached from the upper and lower slide rails 32 and 34 (refer to Fig. 3), and only the intermediate slide part 42 is guided by the intermediate slide rail 36.

The hinge mechanisms 20 are provided on the rear side in the second opening section 30 (the rear opening section 26). A pair of the hinge mechanisms 20 are disposed so as to have a space in the vertical direction of the vehicle body 5. The swing door panel 16 is supported so as to be swingable with respect to the vehicle body 5 by the hinge mechanisms 20, and as shown in Fig. 3, the swing door panel 16 swings to be opened and closed centering on the shaft along the vertical direction of the vehicle body 5.

The locking mechanism 22 includes a lock 44 and a door lock striker 46. The locking mechanism 22 is a mechanism which locks the slide door panel 14 to the swing door panel 16 at the open position of the slide door panel 14. The lock 44 is attached to a base B mounted with the upper slide portion 3 8 and a base (not shown) mounted with the lower slide portion 40. The door lock striker 46 is provided at each position corresponding to the lock 44 in the swing door panel 16.

In the locking mechanism 22, when the slide door panel 14 reaches the open position (the position where the rollers of the upper and lower slide portion 38 and 40 separate from the upper and lower slide rails 32 and 34), the lock 44 of the slide door panel 14 is connected to the door lock striker 46 of the swing door panel 16. Accordingly, the slide door panel 14 and the swing door panel 16 are fixed.

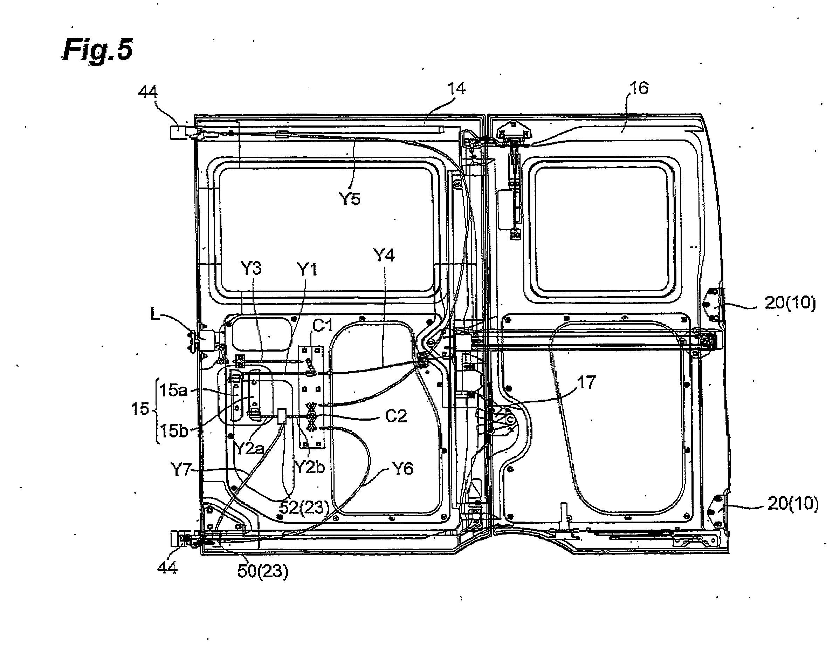

FIG. 5 is a diagram visibly showing the slide door panel and the swing door panel from the outside of the vehicle. As shown in FIG. 5, the handle 15 includes a first handle 15a and a second handle 15b. The first handle 15a is a handle which is operated when opening the slide door panel 14. The first handle 15a is connected to a first connection controlling portion C1 through a wire Y1. A plurality of (here, two) wires Y3 and Y4 are connected to the first connection controlling portion C1.

The wire Y3 is connected to a lock-up portion L which locks the slide door panel 14 to the vehicle body 5. The wire Y4 is connected to a lock (not shown) which is attached to the vicinity of the center of the rear end of the slide door panel 14. With such a configuration, when the first handle 15a is operated, the wires Y3 and Y4 are operated through the first connection controlling portion C1, so that the lock-up portion L and the lock are controlled.

The second handle 15b is a handle which is operated when closing the slide door panel 14. The second handle 15b is connected to a second connection controlling portion C2 through a linkage controlling portion 52 (to be described later) by wires Y2a and Y2b. A plurality of (here, two) wires Y5 and Y6 are connected to the second connection controlling portion C2. The wire Y5 is connected to a latch (not shown) disposed in the lock 44 which is disposed at the upper portion of the slide door panel 14. The wire Y6 is connected to a latch (not shown) disposed in the lock 44 which is disposed at the lower portion of the slide door panel 14. With such a configuration, when the second handle 15b is operated, the wires Y5 and Y6 are operated through the second connection controlling portion C2, so that the lock 44 is controlled. Accordingly, the connection between the lock 44 and the door lock striker 46 is released.

The connection between the lock 44 of the slide door panel 14 and the door lock striker 46 of the swing door panel 16 may be released by the operation of the second handle 15b of the slide door panel 14. For this reason, when the second handle 15b of the slide door panel 14 is operated by mistake even in a state where the slide door panel 14 and the swing door panel 16 are fixed when opening the swing door panel 16, the fixation between the lock 44 and the door lock striker 46 is released, so that the slide door panel 14 may slide. At this time, when the slide door panel 14 slides toward the front side of the vehicle body 5 with respect to the swing door panel 16, there is a concern that the intermediate slide portion 42 may separate from the intermediate slide rail 36 and hence the slide door panel 14 may come away from the swing door panel 16.

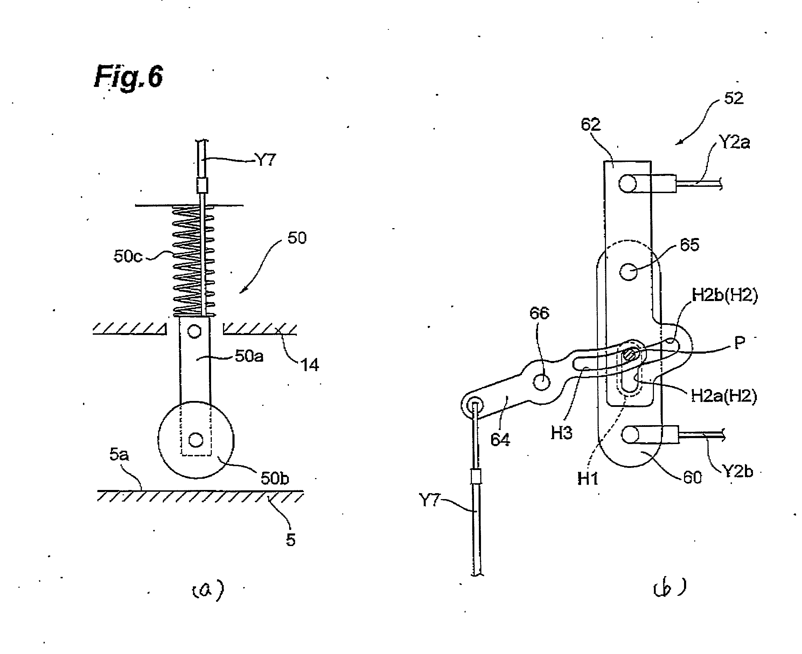

Therefore, the vehicle door structure 10 according to the embodiment includes an idling mechanism 23 as shown in FIGS. 6A and 6B. FIGS. 6A and 6B are diagrams showing the idling mechanism, where FIG. 6A illustrates a configuration of an abutting portion and FIG. 6B illustrates a configuration of a linkage control portion. The idling mechanism 23 shown in FIGS. 6A and 6B is a mechanism which invalidates the operation of the handle 15 (second handle 15b) with respect to the slide door panel 14 when the swing door panel 16 is opened. The idling mechanism 23 includes an abutting portion 50, the linkage controlling portion 52, and a wire Y7 which connects the abutting portion 50 to the linkage controlling portion 52.

The abutting portion 50 abuts against a body surface 5a of the vehicle body 5 at the closed position of the swing door panel 16 where the swing door panel 16 closes the second opening 30. The abutting portion 50 is disposed near, for example, the lower slide portion 40 in the slide door panel 14. More specifically, the abutting portion 50 is disposed at a position where the abutting portion abuts against the body surface 5a of the vehicle body 5 when the slide door panel 14 slides and abuts against the body surface 5a of the vehicle body 5 at the open position of the slide door panel 14. The abutting portion 50 is disposed at a position where the abutting portion abuts against the body surface 5a of the vehicle body 5 in the slide door panel 14 except for the case of opening of the swing door panel 16.

The abutting portion 50 includes a base body portion 50a, a roller 50b, and a spring 50c. One end of the wire Y7 is connected to one end of the base body portion 50a. The roller 50b is a portion which abuts against the body surface 5a of the vehicle body 5. The roller 50b is disposed at the other end of the base body portion 50a, and is provided so as to be rotatable with respect to the base body portion 50a. By the roller 50b, the abutting portion 50 is provided so as to be movable while abutting against the body surface 5a of the vehicle body 5 in response to the sliding movement of the slide door panel 14. The spring 50c is connected to one end of the base body portion 50a. The spring 50c biases the base body portion 50a and the roller 50b toward the vehicle body 5.

Since the abutting portion 50 is biased toward the vehicle body 5 by the spring 50c, the abutting portion moves toward the vehicle body 5 when the swing door panel 16 is opened, that is, the roller 50b separates from the body surface 5a of the vehicle body 5. At this time, the abutting portion 50 pulls the wire Y7 which is connected to the base body portion 50a.

The linkage controlling portion 52 controls the mechanical linkage between the second handle 15b and the locking mechanism 22. The linkage controlling portion 52 maintains the linkage between the second handle 15b and the locking mechanism 22, that is, the lock 44 when the abutting portion 50 abuts against the vehicle body 5. The linkage controlling portion 52 breaks the linkage between the second handle 15b and the locking mechanism 22 when the abutting portion 50 separates from the vehicle body 5. The linkage controlling portion 52 is disposed between, for example, the second handle 15b and the second connection controlling portion C2. Specifically, the linkage controlling portion 52 is provided between the wire Y2a and the wire Y2b which connect the second handle 15b and the second connection controlling portion C2 to each other. The linkage controlling portion 52 includes a first member 60, a second member 62, and a third member 64.

The first member 60 is a plate-like member, and is provided with a first guide hole H1. The first guide hole H1 is a hole which is long in the longitudinal direction, and extends in the extension direction of the first member 60. The wire Y2b which is connected to the second connection controlling portion C2 is connected to one end (lower end) of the first member 60. Specifically, the wire Y2b which is interlocked with the wires Y5 and Y6 controlling the release of the lock 44 is connected to the first member 60. Further, the other end (upper end) of the first member 60 is axially supported by a shaft 65 fixed to the slide door panel 14 so as to be rotatable about the shaft with respect to the slide door panel 14.

The second member 62 is a plate-like member, and is provided with a second guide hole H2. The second guide hole H2 is provided near one end (lower end) of the second member 62. The second guide hole H2 is substantially formed in an L-shape, and includes a first portion H2a which extends in the extension direction of the second member 62 and a second portion H2b which extends so as to be curved upward in an inclined direction from one end (upper end) of the first portion H2a. Further, the second member 62 is rotatably connected to the first member 60. The substantial center portion of the second member 62 is connected to the other end (upper end) of the first member 60 by the shaft 65, and the second member rotates about the shaft with respect to the first member 60 and the slide door panel 14. The wire Y2a which is connected to the second handle 15b is connected to the other end (upper end) of the second member 62.

The third member 64 is provided with a third guide hole H3. The third guide hole H3 is formed in a curved shape, and is substantially formed in the same shape as that of the second portion H2b of the second guide hole H2. The center portion of the third member 64 is axially supported by a shaft 66 fixed to the slide door panel 14, and the third member is provided so as to be rotatable about the shaft. The wire Y7 is connected to one end of the third member 64. The third member 64 moves along with the operation of the abutting portion 50 by the wire Y7.

In the linkage controlling portion 52, the first member 60, the second member 62, and the third member 64 are disposed so as to overlap each other, and a pin P is provided at a position where the first guide hole H1, the second guide hole H2, and the third guide hole H3 are common to each other. The pin P is provided so as to be movable along the first guide hole H1, the second guide hole H2, and the third guide hole H3.

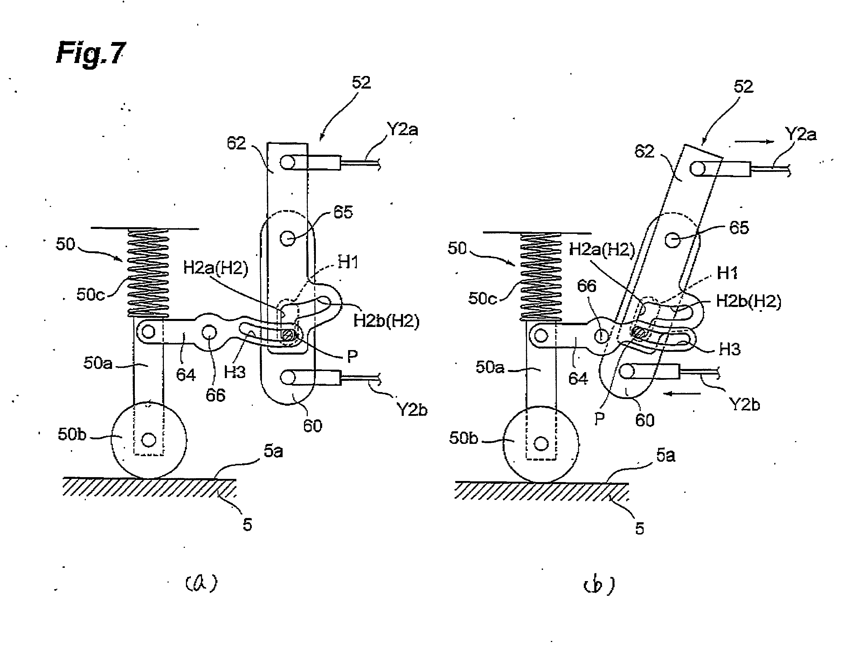

Next, an operation of the idling mechanism 23 will be described by referring to FIGS. 7A to 8B. FIGS. 7A to 8B are showing an operation of the idling mechanism. Furthermore, in FIGS. 7A to 8B, for convenience of description, a configuration is exemplified in which the abutting portion 50 is directly connected to the linkage controlling portion 52. Of course, even in the case of the configuration in which the abutting portion 50 and the linkage controlling portion 52 according to the embodiment are connected to each other by the wire Y7, the same operation as that of the configuration shown in FIGS. 7A to 8B is performed.

First, as shown in FIG. 7A, when the roller 50b of the abutting portion 50 abuts against the body surface 5a of the vehicle body 5, that is, the swing door panel 16 is closed, the linkage controlling portion 52 is present at the initial state. The initial state indicates a state where the third member 64 is present at the initial position where the third member is not operated (does not rotate). At this time, the pin P is positioned at the lower portion of the first portion H2a of the second guide hole H2 and the first guide hole H1 and at one end side (right side) of the third guide hole H3.

When the handle 15b is operated in this state, the wire Y2a is pulled as shown in FIG. 7B. At this time, the pin P moves along the third guide hole H3 while being positioned at the lower portion of the first portion H2a of the second guide hole H2 and the first guide hole H1. With this movement, the first member 60 and the second member 62 move about the shaft 65 in a synchronized state while the movement thereof is regulated in the left and right direction of the drawing by the pin P. Specifically, the first member 60 and the second member 62 are simultaneously inclined in a direction in which they are pulled by the wire Y2a. Accordingly, the wire Y2b which is connected to the lower end of the first member 60 is pulled. As a result, the second connection controlling portion C2 connected with the wire Y2b operates two wires Y5 and Y6, so that the connection of the lock 44 with respect to the door lock striker 46 is released.

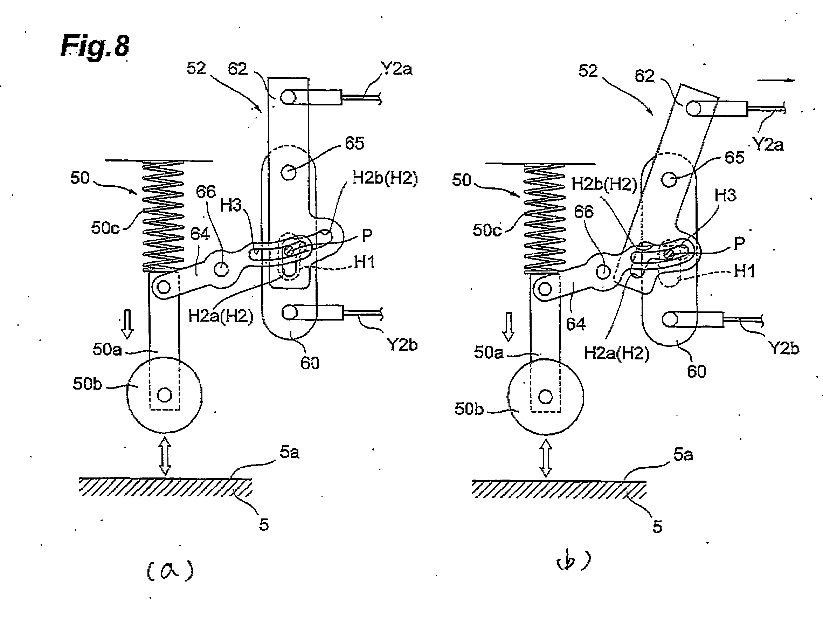

Meanwhile, as shown in FIG. 8A, when the roller 50b of the abutting portion 50 separates from the body surface 5a of the vehicle body 5, that is, the swing door panel 16 is opened, the third member 64 of the linkage controlling portion 52 rotates about the shaft 66 with the operation in which the abutting portion 50 advances toward the vehicle body 5. Specifically, one end of the third member 64 is pulled so as to rotate about the shaft in response to the operation in which the abutting portion 50 advances toward the vehicle body 5. Accordingly, the pin P is moved toward the upper portion (one end (left end) of the second portion H2b) of the first portion H2a of the second guide hole H2 at the upper portion of the first guide hole H1.

When the handle 15b is operated in this state, the wire Y2a is pulled as shown in FIG. 8B. At this time, the second member 62 is movable along the second portion H2b of the second guide hole H2 with respect to the pin P. For this reason, only the second member 62 is inclined in a direction in which the second member is pulled by the wire Y2a, so that the first member 60 is not synchronized with this operation. Thus, even when the second handle 15b is operated, the operation is not transmitted to the wire Y2b connected to the first member 60 (the operation of the second handle 15b is invalidated). As a result, even when the second handle 15b is operated, the connection between the lock 44 and the door lock striker 46 is not broken, and the connection state is maintained. Specifically, even when the handle 15b is operated, the fixation of the slide door panel 14 and the swing door panel 15 is maintained.

As described above, in the vehicle door structure 10 according to the embodiment, the idling mechanism 23 is provided so as to invalidate the operation of the second handle 15b controlling the locking mechanism 22 in the slide door panel 14 when the swing door panel 16 is opened. Accordingly, in the vehicle door structure 10, since the operation of the second handle 15b is invalidated by the idling mechanism 23 even when the second handle 15b of the slide door panel 14 is operated when the swing door panel 16 is opened, the connection between the lock 44 and the door lock striker 46 is not broken. Thus, in the vehicle door structure 10, when the swing door panel 16 is opened, the fixation of the slide door panel 14 and the swing door panel 16 by the locking mechanism 22 is maintained. As a result, it is possible to prevent the slide door panel 14 from coming away from the swing door panel 16 in the vehicle door structure 10.

Further, the idling mechanism 23 includes the abutting portion 50 and the linkage controlling portion 52, the linkage controlling portion 52 maintains the linkage between the second handle 15b and the locking mechanism 22 when the abutting portion 50 abuts against the vehicle body 5 and breaks the linkage between the second handle 15 and the locking mechanism 22 when the abutting portion 50 separates from the vehicle body 5. Specifically, the linkage controlling portion 52 breaks the linkage between the second handle 15b and the lock 44 when the swing door panel 16 is opened. With such a configuration, in the vehicle door structure 10, it is possible to invalidate the operation of the handle 15 of the slide door panel 14 when the swing door panel 16 is opened.

The invention is not limited to the above-described embodiment. For example, in the above-described embodiment, a configuration has been described in which the abutting portion 50 and the linkage controlling portion 52 are connected to each other by the wire Y7, but the abutting portion 50 and the linkage controlling portion 52 may be directly connected to each other as shown in FIGS. 7A to 8B.

Further, the arrangement position of the idling mechanism 23 (the abutting portion 50 and the linkage controlling portion 52) is not limited to the above-described position. The arrangement position of the idling mechanism 23 may be appropriately set in response to the design. Furthermore, it is possible to improve the sensitivity of the idling mechanism 23 with respect to the opening of the swing door panel 14 by the amount in which the abutting portion 50 is disposed at the front side in the slide door panel 14 or the swing door panel 16.
A vehicle door structure 10 includes an idling mechanism 23 which invalidates an operation of a handle 15 controlling a locking mechanism 22 in a slide door panel 14 when a swing door panel 16 is opened, the idling mechanism 23 includes an abutting portion 50 which abuts against the vehicle body 5 at a closed position of a swing door panel and a linkage controlling portion 52 which controls a linkage between the handle 15 and the locking mechanism 22, and the linkage controlling portion 52 maintains the linkage between the handle 15 and the locking mechanism 22 when the abutting portion 50 abuts against the vehicle body 5 and breaks the linkage between the handle 15 and the locking mechanism 22 when the abutting portion 50 separates from the vehicle body 5.

## Claims

1. A vehicle door structure comprising:
a first door panel which is installed at a first opening section provided in a vehicle body, the first door panel opens and closes the first opening section;
a second door panel which is installed at a second opening section continuously provided adjacent to the first opening section, the second door panel opens and closes the second opening section;
a sliding mechanism with which the first door panel is slidably mounted with respect to the vehicle body and the second door panel, and the first door panel is moved between a closed position at which the first opening section is closed and an open position at which the first door panel overlaps the second door panel at the same time as the first opening section is fully opened;
a swinging mechanism with which the second door panel is swingably supported with respect to the vehicle body, and the second door panel is made swingable when the first door panel is at the open position,; and
a locking mechanism which locks the first door panel to the second door panel at the open position of the first door panel,
wherein the vehicle door structure further includes a controlling mechanism which invalidates an operation of a handle controlling the locking mechanism in the first door panel when the second door panel is opened.

2. The vehicle door structure according to claim 1,
wherein the controlling mechanism includes
an abutting portion which is provided in the first door panel or the second door panel and abuts against the vehicle body at the closed position of the second door panel where the second opening section is closed by the second door panel, and
a linkage controlling portion which controls a linkage between the handle and the locking mechanism, and
wherein the linkage controlling portion maintains the linkage between the handle and the locking mechanism when the abutting portion abuts against the vehicle body and breaks the linkage between the handle and the locking mechanism when the abutting portion separates from the vehicle body.
